# EUROPÄISCHE PATENTSCHRIFT

(11) **EP 0 824 428 B1**
(45) Veröffentlichungstag und Bekanntmachung des Hinweises auf die Patenterteilung: **02.06.1999**
(21) Anmeldenummer: 96907362.6
(22) Anmeldetag: 06.03.1996
(51) Int. Cl.: B60T 8/36, B60T 8/42

(54) **HYDRAULISCHE BREMSANLAGE MIT ELEKTRONISCHER BREMSDRUCKREGELUNG**
HYDRAULIC BRAKING SYSTEM WITH ELECTRONIC BRAKING PRESSURE REGULATION
SYSTEME DE FREINAGE HYDRAULIQUE A REGULATION ELECTRONIQUE DE LA PRESSION DE FREINAGE

(30) Priorität: 15.04.1995 DE 19514171
(43) Veröffentlichungstag der Anmeldung: 25.02.1998
(73) Patentinhaber: Continental Teves AG & Co. oHG, 60488 Frankfurt (DE)
(72) Erfinder: GRONAU, Ralph, D-35083 Wetter (DE); BUSCHMANN, Gunther, D-65510 Idstein (DE)
(86) Internationale Anmeldenummer: EP9600937
(87) Internationale Veröffentlichungsnummer: WO9633080

(56) Entgegenhaltungen:
- DE-A- 2 257 236
- DE-A- 4 440 531
- GB-A- 2 182 740

## Beschreibung

Die Erfindung bezieht sich auf eine hydraulische Bremsanlage der im Oberbegriff des Anspruchs 1 genannten Art. Solche Bremsanlagen sind Bestandteile z.B. von Antiblockiersystemen (ABS), Antriebsschlupfregelungen (ASR), Fahrstabilitätsregelungen (FSR, ASMS) und anderen Kraftfahrzeug-Regelungssystemen.

Eine derartige Bremsanlage ist im Prinzip aus der DE-A-22 57 236 bekannt. Nach dieser Schrift wird als Meßmittel zur Bestimmung der Zeitspanne zwischen der Änderung des Ventilansteuersignals und dem Schaltzeitpunkt des Ventils die sprunghafte Änderung des Stroms im Schaltzeitpunkt erfaßt und ausgewertet.

Bei anderen bekannten und marktgängigen Bremsanlagen mit elektronischer Bremsdruckregelung wird auf die Messung des Vordrucks, d.h. des von der Pedalbetätigung abhängigen Druckes im Bremsdruckgeber oder im Hauptzylinder, sowie des in den einzelnen Radbremsen herrschenden Bremsdruckes verzichtet, obwohl in manchen Situationen die Regelung bei Einbeziehung des tatsächlichen Druckes erheblich verbessert werden könnte. Die Überwachung der Anlagen ließe sich ebenfalls durch Messung des Druckes vereinfachen oder verbessern. Von einer Druckmessung wird bei Bremsanlagen mit ABS oder ASR hauptsächlich aus Kostengründen abgesehen, bei anderen Regelungssystemen ist die Druckmessung unentbehrlich.

Der Erfindung liegt nun die Aufgabe zu Grunde, eine Bremsanlage der vorgenannten Art zu entwickeln, die eine zuverlässige, genaue Messung der Umschaltzeitpunkte der einzelnen Hydraulikventile zuläßt, um auf Basis dieser Information den tatsächlich in dem Bremsdruckgeber und/oder in den einzelnen Radbremsen vorhandenen Druck ermitteln und in die Regelung einbeziehen zu können. Die Bremsanlage sollte sich dennoch durch vergleichsweise geringen Herstellungsaufwand auszeichnen.

Es hat sich herausgestellt, daß diese Aufgabe mit der im Anspruch 1 beschriebenen Bremsanlage gelöst werden kann, deren Besonderheit darin besteht, daß die Meßmittel zur Bestimmung des Umschaltverhaltens der Hydraulikventile als Körperschallsensoren, Beschleunigungs- oder Schwingungsaufnehmer ausgebildet sind, die die beim Aufsetzen der Ventilstößel auf einen Ventilanschlag oder Ventilsitz hervorgerufenen Schallschwingungen sensieren.

Nach einem vorteilhaften Ausführungsbeispiel der Erfindung wird das Umschaltverhalten der Hydraulikventile durch Messung der Verzugszeit bzw. der Zeitspanne, die zwischen dem Anlegen eines Ventilansteuersignals und dem Anschlag des Ventilstößels vergeht, bestimmt.

Die Erfindung beruht auf der Erkenntnis, daß sich das Umschaltverhalten der Hydraulikventile, aus dem wiederum der Druck im Hauptzylinder und in den Radbremsen ermittelt kann, durch Messung des Körperschalls, den die Ventil stößelbewegung hervorruft, mit ausreichender Genauigkeit messen läßt. Es wird lediglich ein einziger Körperschallsensor, Beschleunigungs- oder Schwingungsaufnehmer benötigt; in Sonderfällen werden auch mehrere, sehr einfache Sensoren verwendet. Diese Sensoren, die auf Halbleiterbasis aufgebaut sein können, lassen sich auf dem Ventilgehäuse, also außerhalb des eigentlichen Hydrauliksystems, montieren und stellen somit kein Sicherheitsrisiko dar.

Nach einem anderen vorteilhaften Ausführungsbeispiel der Erfindung trägt der Ventilblock die elektronische Schaltung oder ist mit der elektronischen Schaltung baulich vereinigt, wobei der Körperschallsensor oder der Beschleunigungsaufnehmer innerhalb der elektronischen Schaltung angeordnet oder als Bestandteil der elektronischen Schaltung oder eines integrierten Schaltkreises der elektronischen Schaltung ausgebildet ist.

In den Unteransprüchen sind noch weitere, besonders vorteilhafte Ausführungsbeispiele der Erfindung beschrieben.

Weitere Einzelheiten der Erfindung gehen aus der folgenden Beschreibung von Ausführungsbeispielen anhand der beigefügten Abbildungen hervor.

Es zeigen:
- Fig. 1: in schematischer Darstellung die wichtigsten hydraulischen und elektronischen Komponenten einer Bremsanlage mit Blockierschutzregelung (ABS),
- Fig. 2: im Schnitt ein Einlaßventil der erfindungsgemäß verwendeten Art,
- Fig. 3: im Diagramm die Abhängigkeit des Schaltverzugs (Fig. 3A) und der Schallamplitude (3B) vom Hauptzylinderdruck und
- Fig. 4: in gleicher Darstellungsweise wie Fig. 3 die Abhängigkeit des Schaltverzuges (4A) und der Schallamplitude (4B) vom Druck in der Radbremse.

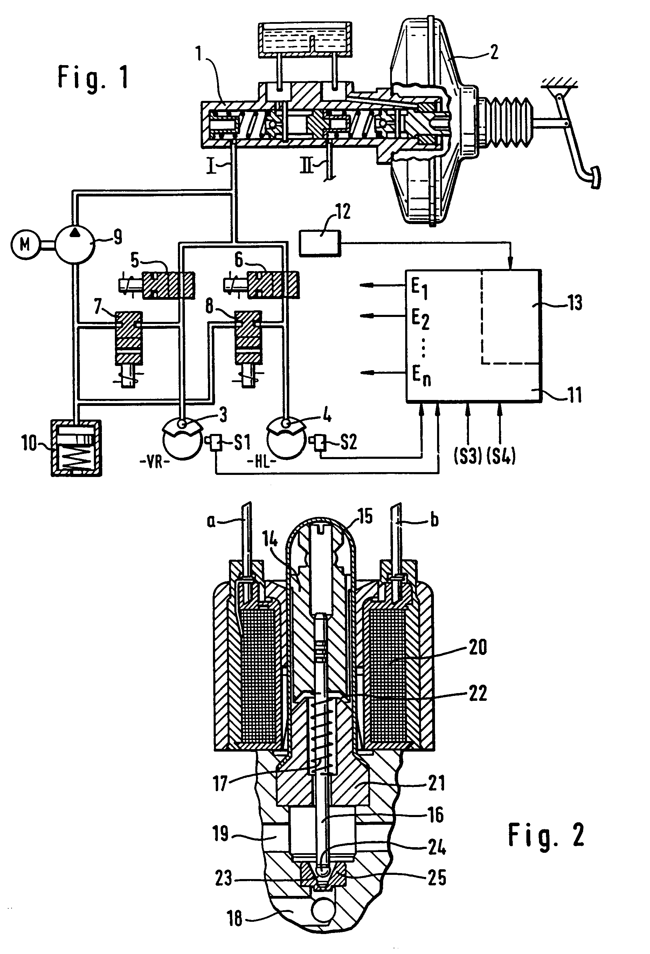

Von einer blockiergeschützten Bremsanlage sind in Fig. 1 ein Tandem-Hauptzylinder 1, dem ein pedalbetätigter Unterdruckverstärker 2 vorgeschaltet ist und ein hydraulischer Bremskreis I, an den die Räder einer Diagonalen oder einer Achse angeschlossen sind, wiedergegeben. Der zweite Bremskreis II umfaßt die gleichen Komponenten wie der Bremskreis I und ist daher nicht hier nicht dargestellt.

In die von dem Hauptzylinder zu den Radbremsen 3, 4 der Räder VR, HL führenden Druckmittelleitungen sind jeweils ein Einlaßventil 5, 6 eingefügt. Außerdem sind die Radbremsen 3, 4 über Druckmittel-Rückflußleitungen, in denen sich Auslaßventile 7, 8 befinden, an die Saugseite einer Hydraulikpumpe 9 und an einen Niederdruckspeicher 10 angeschlossen. Die Druckseite der Hydraulikpumpe 9 führt zurück zur Hauptzylinderseite des Bremskreises I. Es handelt sich hier also um ein "geschlossenes" Bremsensystem.

Die Einlaßventile 5, 6 sind in ihrer Ruhestellung auf Durchlaß geschaltet und versperren nach dem Ansteuern den zugehörigen Druckmittelweg zur Radbremse 3 bzw. 4. Die Auslaßventile 7, 8 sperren dagegen in ihrer Ruhestellung den Druckmitteldurchfluß. Die Ventile 5 bis 8 sind im vorliegenden Ausführungsbeispiel als elektromagnetisch betätigbare 2/2-Wegeventile ausgebildet.

Zu der Bremsanlage nach Fig. 1 gehört ein elektronischer Regler 11, der eine elektronische Schaltung zur Auswertung von Regelsignalen und zur Erzeugung von Bremsdrucksteuersignalen, mit denen die Ventile 5 bis 8 angesteuert werden, enthält. Das Ein- und Ausschalten der Hydraulikpumpe 9 bzw. des elektrischen Antriebsmotors M dieser Pumpe übernimmt ebenfalls die Schaltung des Reglers 11. Eingangssignale zur Blockierschutzregelung werden vor allem mit Hilfe von Radsensoren S1, S2 gewonnen, deren Ausgangssignale das Drehverhalten der beiden Räder VR, HL wiedergeben. Eingänge für die entsprechenden Sensorsignale der beiden anderen Fahrzeugräder, die nicht dargestellt sind, sind ebenfalls angedeutet (S3, S4). Ausgänge E₁ bis Eₙ der Auswerteschaltung 11 führen zu den Hydraulikventilen 5 bis 8 und zu dem Pumpen-Antriebsmotor M.

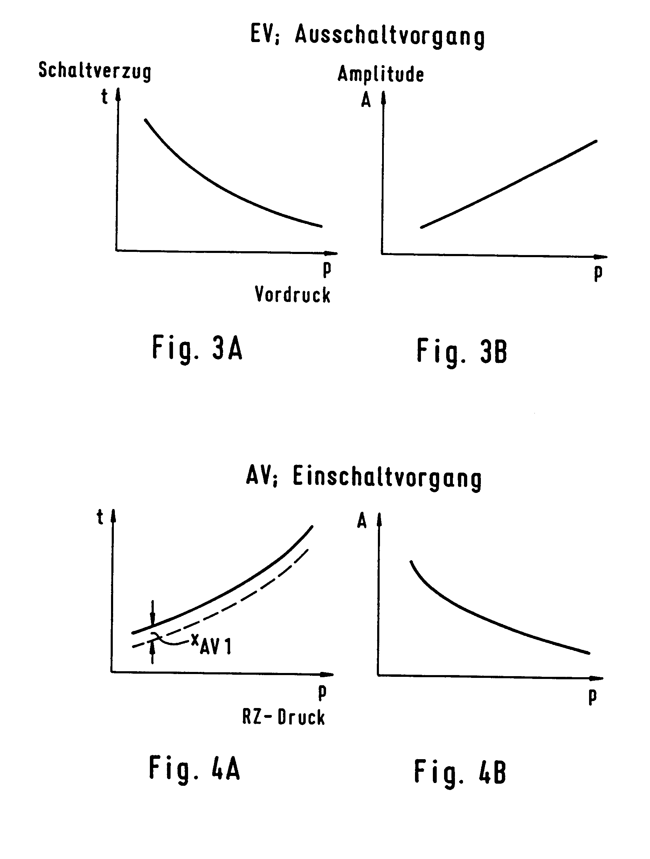

Erfindungsgemäß ist außerdem ein Körperschallsensor 12 bzw. Beschleunigungs- oder Schwingungsaufnehmer vorhanden, mit dem das Umschaltverhalten der Hydraulikventile während eines Regelungsvorganges ermittelt wird. Dieses Umschaltverhalten der Hydraulikventile dient schließlich zur näherungsweisen Bestimmung des Druckes im Hauptzylinder 1, nämlich des Vordruckes, und/oder zur Bestimmung des Bremsdruckes in den einzelnen Radbremsen 3 und 4, wie dies nachstehend anhand der Diagramme in den Fig. 3 und 4 erläutert wird.

Der Ausgang des Körperschallsensors 12 ist in dem Ausführungsbeispiel nach Fig. 1 zu einer gestrichelt abgetrennten Teilschaltung 13 der Auswerteschaltung 11 geführt. In der Teilschaltung 13 sind die Schaltkreise zur Auswertung des Körperschalls und eine Kalibrierschaltung untergebracht. Handelt es sich bei der Auswerteschaltung 11 um eine programmgesteuerte Schaltung auf Basis von Mikrocomputern, Mikrocontrollern oder dergleichen, symbolisiert der Schaltungsteil 13 einen entsprechenden Programmteil.

Mit dem Körperschallsensor 12 wird der von den Hydraulikventilen 5 bis 8 beim Umschalten während bestimmter Betriebsphasen verursachte Schall ermittelt und ausgewertet. Den prinzipiellen Aufbau eines solchen 2/2-Wegeventils 5 bis 8 zeigt Fig. 2. Dargestellt ist in Fig. 2 ein Längsschnitt durch das Hydraulikventil. Das Ventil besteht im wesentlichen aus einem Ventilanker 14, der in einem Ventilgehäuse 15 axial verschiebbar gelagert ist. Ein Ventilstößel 16 ist Bestandteil dieses Ankers 14. Der Anker 14 mit dem Ventilstößel 16 wird durch die Kraft einer Schraubenfeder 17 in der dargestellten Position, die die Ventil-Ruhelage ist, gehalten. In dieser Ruhelage besteht eine hydraulische Verbindung von einem Hydraulikanschluß oder Eingang 18 zu einem Ausgang 19. Der Eingang 18 steht mit dem Hauptzylinder 1 (vergleiche Fig. 1) in Verbindung, der Ausgang 19 führt zu einer Radbremse 3, 4. Es handelt sich also hier um eines der beiden Einlaßventile 5 oder 6 nach Fig. 1.

Das dargestellte Hydraulikventil besitzt eine Ventilbetätigungsspule 20 und einen Magnetkern 21. Der Ventilanker 14 und der Magnetkern 21 sind durch einen Luftspalt 22 getrennt, dessen Ausbildung die Ventilcharakteristik beeinflußt. Hydraulikventile dieser Art sind bekannt. Die elektrischen Anschlußleitungen a, b über die das Ventil angesteuert wird, sind ebenfalls wiedergeben.

Bei Ansteuerung des Hydraulikventils nach Fig. 2 wird auf den Ventilanker 14 eine Kraft ausgeübt, die zur axialen Verschiebung des Ventilstößels 16 und damit zum Verschließen der Durchflußöffnung 23 führt. Der beim Auftreffen des Stößels 16 bzw. des Ventilkopfes 24 auf einem Ventilsitz 25 hervorgerufene Körperschall wird erfindungsgemäß mit Hilfe eines Körperschallsensors 12 (siehe Fig. 1) gemessen, der an einer günstigen Stelle auf dem Ventilgehäuse 15 (dies ist in Fig. 2 nicht dargestellt) angeordnet ist und mit dem Ventilgehäuse 15 ungedämpft in Verbindung steht, damit der Körperschall zu dem Sensor 12 übertragen wird.

Es ist bekannt, die Einlaß- und Auslaßventile baulich zu einem Ventilblock zu vereinen. Mit einem einzigen Körperschallsensor 12 kann dann der von mehreren Ventilen hervorgerufene Schall gemessen werden, wenn sichergestellt ist, daß die Ventile nicht gleichzeitig, sondern nacheinander betätigt werden. Die Zuordnung des Schalls zu dem jeweiligen Ventil läßt sich aus den individuellen Ventilansteuersignalen ableiten.

Gemessen und ausgewertet wird das Schaltverhalten der Hydraulikventile, nämlich die Schaltverzögerung bzw. die Zeitspanne zwischen der elektrischen Ansteuerung des Ventils und dem Anschlagen des Ventilstößels und/oder die Intensität bzw. Amplitude des durch das Anschlagen des Stößels hervorgerufenen Körperschalls. Aus den Diagrammen in den Diagrammen in den Figuren 3A, 3B, 4A und 4B ist zu erkennen, daß grundsätzlich ein Zusammenhang zwischen der Schaltverzögerung und dem jeweils herrschenden Druck (Fig. 3A, Fig. 4A) und zwischen der Schallamplitude und dem Druck (Fig. 3B, 4B) besteht. Diese Zusammenhänge sind je nach Ventilgestaltung und dem jeweiligen Schaltvorgang - Einschalten oder Ausschalten - mehr oder weniger ausgeprägt.

Es kann zweckmäßig sein, empirisch diejenigen Hydraulikventile eines Regelungssystems und diejenigen Schaltvorgänge zu ermitteln, bei denen die Abhängigkeit des Schaltverhaltens bzw. der Schallamplitude von dem Druck am größten ist. Im vorliegenden Ausführungsbeispiel, das für eine Bremsanlage der in Fig. 1 gezeigten Art gilt, wurde das Ausschaltverhalten der Einlaßventile (5, 6) zur Bestimmung des Vordrucks, nämlich des im Hauptzylinder 1 herrschenden Druckes, und das Einschaltverhalten der Auslaßventile (7, 8) zur Bestimmung des Bremsdruckes in der jeweiligen Radbremse ausgewählt. Aus Fig. 3A ist beispielsweise zu erkennen, daß das Ausschalten des Einlaßventils, also das erneute Öffnen dieses Ventils, durch relativ hohen Vordruck unterstützt wird. Bei geringem Vordruck P ist der Schaltverzug t hoch im Vergleich zu dem Verzug bei hohem Druck. Folgerichtigt steigt bei dem Ausschaltvorgang des Einlaßventils die Körperschallamplitude mit steigendem Druck, wie Fig. 3b belegt.

Die Druckabhängigkeit beim Einschalten des Auslaßventils verhält sich gewissermaßen umgekehrt zu dem eben geschriebenen Ausschaltvorgang des Einlaßventils. Wie den Fig. 4A und 4B zu entnehmen ist, wirkt der Druck dem Einschalten des Auslaßventils entgegen; bei geringem Radzylinderdruck P ist die Schaltverzögerung t relativ gering und die durch das Auftreffen des Ventilstößels auf seinem Sitz hervorgerufene Schallamplitude (Fig. 4B) vergleichsweise hoch.

Es leuchtet ein, das die in Fig. 3A, 3B und 4A, 4B dargestellten Abhängigkeiten bei entsprechender Eichung zur Bestimmung des Vordrucks und des Radzylinderdruckes geeignet sind.

Der jeweilige Verlauf der Kurven gemäß den Fig. 3A, 3B, 4A und 4B wird natürlich von den Fertigungstoleranzen, von der jeweils herrschenden Temperatur, insbesondere Betriebstemperatur und von anderen Randbedingungen beeinflußt. Diese Einflüsse äußern sich in einem bestimmten "Offset" bzw. in einer annähernd parallelen Verschiebung der dargestellten Kurven. Die in Fig. 4A wiedergegebene, gestrichelte Kennlinie symbolisiert diese temperatur- und/oder toleranzabhängige Parallelverschiebung. Entsprechendes gilt auch für die Diagramme nach Fig. 3A, 3B und 4B. Durch ständige Kalibrierung mit Hilfe einer Kalibrierschaltung, ausgelöst durch regelmäßig wiederkehrende Ereignisse oder durch ein vorgebenes Zeitraster, wird erfindungsgemäß ein Korrekturwert "x_{AV1}", siehe Fig. 4A, ermittelt. Dieser Korrekturwert "x_{AV1}" wird von der Kalibrierschaltung erfaßt, gespeichert, und bei der Ermittlung bzw. Errechnung des jeweiligen Vordruckes oder Radbremsdruckes berücksichtigt. Die Kalibrierschaltung wird zweckmäßigerweise in der Teilschaltung 13 (siehe Fig. 1) untergebracht.

Die Korrektur- oder Kalibriergröße "x" kann durch kurzzeitige Ansteuerung der Ventile während konventioneller Bremsvorgänge oder bei nicht betätigter Bremse ermittelt werden. Es wird jedem Ventil, das zur Druckbestimmung herangezogen werden soll, ein spezieller Korrektor- oder Kalibrierwert "x" zugeordnet. Beispielsweise ist "x_{AV1}" der Korrekturwert für das Auslaßventil Nummer 1.

Da die Schaltverzögerungen t bzw. die Zeitspannen zwischen dem Ansteuern eines Ventils und dem Anschlagen des Ventilstößels relativ kurz sind, ist ein gleichzeitiges Betätigen mehrerer Ventile selten oder läßt sich durch entsprechende Auslegung der Schaltung 11 verhindern. Folglich ist jederzeit eine eindeutige Zuordnung zwischen dem hervorgerufenen Körperschall und dem jeweiligen Ventil möglich. Daher genügt in der Regel ein einziger Körperschallsensor. In Sonderfällen wäre es auch denkbar, mehrere Schallsensoren zu verwenden und diese jeweils bestimmten Ventilen oder Ventilgruppen zuzuordnen.

## Patentansprüche

1. Hydraulische Bremsanlage mit elektronischer Bremsdruckregelung, mit einem Bremsdruckgeber (1,2), mit elektrisch schaltbaren, in die Druckmittelleitungen eingefügten Hydraulikventilen (5 bis 8), die zur Druckmodulation dienen und die in einem Ventilgehäuse(15) angeordnete Ventilstößel(16) enthalten, welche beim Ansteuern der Hydraulikventile (5 bis 8) in eine Endposition verschoben werden, mit Sensoren (S1 bis S4) zur Ermittlung von Regelgrößen, mit Meßmitteln (12) zur Bestimmung des Umschaltverhaltens eines oder mehrerer der Hydraulikventile (5 bis 8) während eines Bremsdruckregelungsvorganges und mit einer elektronischen Schaltung (11,13) zur Auswertung der Sensorsignale sowie zur Erzeugung von Bremsdrucksteuersignalen, die den Hydraulikventilen (5 bis 8) während eines Bremsdruckregelungsvorgangs zuführbar sind, wobei das Umschaltverhalten der Hydraulikventile(5 bis 8) zur näherungsweisen Ermittlung des in dem Bremsdruckgeber (1,2) und/oder in den einzelnen Radbremsen (3,4) vorhandenen Bremsdruckes ausgewertet wird, **dadurch gekennzeichnet**, daß die Meßmittel(12) zur Bestimmung des Umschaltverhaltens der Hydraulikventile (5 bis 8) als Körperschallsensoren, Beschleunigungs- oder Schwingungsaufnehmer ausgebildet sind, die die beim Aufsetzen der Ventilstößel (16) auf einen Ventilanschlag oder Ventilsitz (25) hervorgerufenen Schallschwingungen sensieren.

2. Bremsanlage nach Anspruch 1, **dadurch gekennzeichnet**, daß das Umschaltverhalten der Hydraulikventile (5 bis 8) durch Messung der Verzugszeit bzw. der Zeitspanne (7), die zwischen dem Anlegen eines Ventilansteuersignals und dem Anschlag des Ventilstößels (16) vergeht, bestimmt wird.

3. Bremsanlage nach Anspruch 1 oder 2, **dadurch gekennzeichnet**, daß die Körperschallsensoren (12) in Form von in Ventilnähe angeordneten Beschleunigungssensoren oder Beschleunigungsaufnehmern ausgebildet sind.

4. Bremsanlage nach einem oder mehreren der Ansprüche 1 bis 3, **dadurch gekennzeichnet**, daß die Hydraulikventile in einem Ventilblock baulich zusammengefaßt sind, der mit einem einzigen Körperschallsensor (12) oder Beschleunigungsaufnehmer ungedämpft gekoppelt ist.

5. Bremsanlage nach Anspruch 4, **dadurch gekennzeichnet**, daß der Ventilblock die elektronische Schaltung trägt oder mit der elektronischen Schaltung baulich vereinigt ist und daß der Körperschallsensor (12) oder Beschleunigungsaufnehmer innerhalb der elektronischen Schaltung angeordnet ist.

6. Bremsanlage nach Anspruch 4, **dadurch gekennzeichnet**, daß der Ventilblock die elektronische Schaltung trägt oder mit der elektronischen Schaltung baulich vereinigt ist und daß der Körperschallsensor (12) oder Beschleunigungsaufnehmer als Bestandteil der elektronischen Schaltung (11, 13) oder eines integrierten Schaltkreises der elektronischen Schaltung ausgebildet ist.

7. Bremsanlage nach einem oder mehreren der Ansprüche 1 bis 6, **dadurch gekennzeichnet**, daß zur Bestimmung des Umschaltverhaltens der Hydraulikventile (5 bis 8) - ausschließlich oder zusätzlich zu einer Verzugszeitauswertung - die Intensitität (A) und/oder die Frequenz des Körperschalls bzw. der Schallschwingungen bestimmt werden.

8. Bremsanlage nach einem oder mehreren der Ansprüch 1 bis 7, die als Hydraulikventile (5 bis 8) in der Ruhelage offene, auf Sperren umschaltbare Einlaßventile (5,6) und in der Ruhelage sperrende, auf Durchlaß umschaltbare Auslaßventile (7,8) enthält, **dadurch gekennzeichnet**, daß zur Bestimmung des in dem Bremsdruckgeber (1, 2) herrschenden Druckes das Ausschaltverhalten der Einlaßventile (5, 6) ausgewertet wird.

9. Bremsanlage nach einem oder mehreren der Ansprüche 1 bis 8, **dadurch gekennzeichnet**, daß diese mit einer Kalibrierschaltung (13) ausgerüstet ist, die zu vorgegebenen Zeitpunkten bei nichtbetätigter Bremse die Hydraulikventile (5 bis 8) ansteuert, das Schaltverhalten ermittelt und als Korrektur- oder Kalbibriergröße (x_{AV1}) für die Druckbestimmung während eines Regelungsvorganges speichert.

## Claims

1. Hydraulic brake system with electronic braking pressure control, including a braking pressure generator (1, 2), electrically operable hydraulic valves (5 to 8) which are inserted into the pressure fluid lines for the purpose of pressure modulation and include valve tappets (16) arranged in a valve housing (15), the valve tappets being displaced into a final position when the hydraulic valves (5 to 8) are actuated, sensors (S1 to S4) for determining control quantities, measuring instruments (12) for determining the change-over behavior of one or a plurality of hydraulic valves (5 to 8) during a braking pressure control operation, and an electronic circuit (11, 13) for evaluating the sensor signals and for generating braking pressure control signals which can be sent to the hydraulic valves (5 to 8) during a braking pressure control operation, wherein the change-over behavior of the hydraulic vales (5 to 8) is evaluated for the approximate determination of the braking pressure prevailing in the braking pressure generator (1, 2) and/or in the individual wheel brakes (3, 4), **characterized** in that the measuring instruments (12) for determining the change-over behavior of the hydraulic valves (5 to 8) are configured as bone-conduction sensors, or acceleration or vibration pickups which sense the sound vibrations caused when the valve tappet (16) moves to sit on a valve stop or valve seat (25).

2. Brake system as claimed in claim 1, **characterized** in that the change-over behavior of the hydraulic valves (5 to 8) is determined by measuring the delay time or the time period (7) lapsing between the sending of a valve actuation signal and the abutment of the valve tappet (16).

3. Brake system as claimed in claim 1 or claim 2, **characterized** in that the bone-conduction sensors (12) are configured as acceleration sensors or acceleration pickups arranged in the proximity of the valves.

4. Brake system as claimed in any one or more of claims 1 to 3, **characterized** in that the hydraulic valves are structurally integrated in a valve block which is coupled to one single bone-conduction sensor (12) or acceleration pickup in an undampened fashion.

5. Brake system as claimed in claim 4, **characterized** in that the valve block accommodates the electronic circuit or is structurally integrated with the electronic circuit, and in that the bone-conduction sensor (12) or acceleration pickup is arranged within the electronic circuit.

6. Brake system as claimed in claim 4, **characterized** in that the valve block accommodates the electronic circuit or is structurally integrated with the electronic circuit, and in that the bone-conduction sensor (12) or acceleration pickup is configured as part of the electronic circuit (11, 13) or an integrated circuit of the electronic circuit.

7. Brake system as claimed in any one or more of claims 1 to 6, **characterized** in that for determining the change-over behavior of the hydraulic valves (5 to 8), exclusively or in addition to the delay time analysis, the intensity (A) and/or the frequency of the solid-borne sound or the sound vibrations is determined.

8. Brake system as claimed in any one or more of claims 1 to 7 which, as hydraulic valves (5 to 8), has inlet valves (5, 6) which are open in their inactive position and are commutable to close, and outlet valves (7, 8) which are closed in their inactive position and are commutable to open, **characterized** in that the deactivation behavior of the inlet valves (5, 6) is evaluated to determine the pressure prevailing in the braking pressure generator (1, 2).

9. Brake system as claimed in any one or more of claims 1 to 8, **characterized** in that the brake system includes a calibration circuit (13) which actuates the hydraulic valves (5 to 8) at predetermined times when the brake is not applied, asertains the switching behavior and stores it as a correction or calibration variable (x_{AV1}) to determine the pressure during a control operation.

## Revendications

1. Système hydraulique de freinage à régulation électronique de pression de freinage, comprenant un générateur de pression de freinage (1, 2), des valves hydrauliques (5 à 8), commutables électriquement et interposées dans les conduites d'agent de pression, qui servent à la modulation de pression et comportent des poussoirs de valve (16) qui sont disposés dans un boîtier de valve (15) et sont déplacés dans une position extrême lors de la commande des valves hydrauliques (5 à 8), des capteurs (S1 à S4) servant à déterminer des grandeurs de régulation, des moyens de mesure (12) servant à relever le comportement de commutation d'une ou plusieurs des valves hydrauliques (5 à 8) pendant une opération de régulation de pression de freinage, et un circuit hydraulique (11, 13) servant à analyser les signaux de capteurs et à produire des signaux de commande de pression de freinage qui peuvent être appliqués aux valves hydrauliques (5 à 8) pendant une opération de régulation de pression de freinage, le comportement de commutation des valves hydrauliques (5 à 8) étant analysé pour déterminer approximativement la pression de freinage existant dans le générateur de pression de freinage (1, 2) et/ou dans les différents freins de roue (3, 4), caractérisé en ce que les moyens de mesure (12) servant à déterminer le comportement de commutation des valves hydrauliques (5 à 8) sont réalisés sous forme de capteurs de bruit de structure, capteurs d'accélération ou capteurs de vibrations,qui détectent les vibrations acoustiques provoquées lors de la venue en appui du poussoir de valve (16) sur une butée de valve ou un siège de valve.

2. Système de freinage suivant la revendication 1, caractérisé en ce que le comportement de commutation des valves hydrauliques (5 à 8) est déterminé au moyen d'une mesure du temps de retard, plus précisément de l'intervalle de temps (t) qui s'écoule entre l'application d'un signal de commande de valve et la venue en butée du poussoir de valve (16).

3. Système de freinage suivant la revendication 1 ou 2, caractérisé en ce que les capteurs de bruit de structure (12) sont réalisés sous forme de capteurs d'accélération ou capteurs de vibrations disposés au voisinage des valves.

4. Système de freinage suivant une ou plusieurs des revendications 1 à 3, caractérisé en ce que les valves hydrauliques sont réunies structurellement dans un bloc de valves qui est accouplé d'une manière non amortie à un capteur de bruit de structure (12) ou capteur d'accélération unique.

5. Système de freinage suivant la revendication 4, caractérisé en ce que le bloc de valves porte le circuit électronique ou est réuni structurellement au circuit électronique et en ce que le capteur de bruit de structure (12) ou capteur d'accélération est disposé dans le circuit électronique.

6. Système de freinage suivant la revendication 4, caractérisé est en ce que le bloc de valves porte le circuit électronique ou est solidaire structurellement du circuit électronique et en ce que le capteur de bruit de structure (12) ou le capteur d'accélération est réalisé en tant que partie constitutive du circuit électronique (11, 13) ou d'un circuit intégré du circuit électronique.

7. Système de freinage suivant une ou plusieurs des revendications 1 à 6, caractérisé en ce que, pour déterminer le comportement de commutation des valves hydrauliques (5 à 8), en excluant une analyse du temps de retard ou en supplément à celle-ci, l'intensité (A) et/ou la fréquence du bruit de structure, plus précisément des vibrations du bruit, sont relevées.

8. Système de freinage suivant une ou plusieurs des revendications 1 à 7, qui comporte, en tant que valves hydrauliques (5 à 8), des valves d'entrée (5, 6), ouvertes en position de repos et commutables vers un blocage, et des valves de sortie (7, 8) bloquant en position de repos et commutables vers un passage, caractérisé en ce que le comportement de mise hors service des valves d'entrée (5, 6) est analysé pour déterminer la pression régnant dans le générateur de pression de freinage (1, 2).

9. Système de freinage suivant une ou plusieurs des revendications 1 à 8, caractérisé en ce qu'il est pourvu d'un circuit d'étalonnage (13) qui, à des instants préfixés pendant que le frein n'est pas actionné, commande les valves hydrauliques (5 à 8), relève le comportement de commutation et le met en mémoire en tant que grandeur de correction ou d'étalonnage (x_{XV1}) en vue de la détermination de pression pendant une opération de régulation.
